# EUROPEAN PATENT SPECIFICATION

(11) **EP 3 724 560 B1**
(45) Date of publication and mention of the grant of the patent: **09.02.2022**
(21) Application number: 17872889.5
(22) Date of filing: 11.12.2017
(51) Int. Cl.: F25B 39/02, F28D 7/16, F28F 9/22, F28F 9/00, B01D 1/30, F28D 21/00

(54) **BAFFLE, EVAPORATOR COMPRISING SUCH A BAFFLE AND REFRIGERATION CIRCUIT COMPRISING SUCH AN EVAPORATOR**
ABLENKPLATTE, VERDAMPFER MIT EINER SOLCHEN ABLENKPLATTE UND KÄLTEKREISLAUF MIT EINEM SOLCHEN VERDAMPFER
DÉFLECTEUR, ÉVAPORATEUR COMPRENANT UN TEL DÉFLECTEUR ET CIRCUIT DE RÉFRIGÉRATION AVEC UN TEL ÉVAPORATEUR

(43) Date of publication of application: 21.10.2020
(73) Proprietor: Carrier Corporation, Palm Beach Gardens, FL 33418 (US)
(72) Inventor: LENOBLE, Yohann, 01120 Montluel (FR); VENEZIANI, Arnaud, 01120 Montluel (FR); FERVEL, Pierre-Alain, 01120 Montluel (FR); FONTE, Nicolas, 01120 Montluel (FR)
(74) Representative: Lavoix
(86) International application number: PCT/IB2017/001783
(87) International publication number: WO 2019/116072

(56) References cited:
- CN-U- 202 109 705
- CN-U- 204 718 194
- DE-A1-102013 010 510

## Description

The invention concerns a baffle for an evaporator, an evaporator comprising such a baffle and a refrigeration circuit comprising such an evaporator.

Traditionally, commercial chillers are operating with oil lubricated compressors and a small controlled quantity of lubricant oil is transferred to the refrigerant fluid. Oil return to the compressor is ensured by means of controlled liquid carry-over in the evaporator of the refrigeration circuit. The use of new technologies of oil free compressors implies that liquid carry-over must be avoided to prevent damages on the compressors. The carry-over phenomenon occurs when a quantity of refrigerant fluid in gaseous state in the evaporator carries droplets of refrigerant in liquid state that are driven towards the compressors due to the speed of the flowing gas.

A conventional solution to prevent liquid carry-over is the application of complex systems of chicanes, large separating volumes or coalescing materials at the compressor inlet. Alternative solutions include the application of an evaporator with an oversized shell. This technique consists of increasing the distance between the liquid level in the evaporator and the compressor suction pipe in order to reduce suction gas velocity. However, this solution is expensive and requires excessive refrigerant charge.

Some solutions include a specific baffle which prevents liquid carry-over by forming obstacle barrier against liquid droplets. However, the design of the evaporator must always ensure continuous velocity distribution in case more than one compressor is used, and therefore a low refrigerant velocity must be kept. The presence of such obstacle barrier reduces the free space available for the gas flow and therefore increases the gas velocity.

CN-U-204718194 discloses an evaporator comprising a baffle having perforated areas formed by holes of increasing diameters and a non-perforated area situated under the suction pipe. The baffle has closed axial sides. Such a baffle design does not allow a significant enough reduction of the refrigerant velocity and the velocity distribution is not optimal.

The aim of the invention is to provide a new baffle which allows a significant local gas velocity reduction and improvement of the distribution of velocity.

To this end the invention concerns a baffle for an evaporator of a refrigeration circuit, said baffle being adapted to be placed in an internal volume of a shell of the evaporator to form a barrier against a refrigerant fluid flow towards a suction pipe of the evaporator, the baffle comprising at least one perforated area and at least one non-perforated area, wherein the perforated area and the non-perforated area of the baffle form a void ratio at least equal to 40% of the total surface of the baffle, and the baffle has open axial sides allowing refrigerant fluid flow along a longitudinal axis of the baffle.

Thanks to the invention, the open sides significantly reduce the local velocity of the gas passing through the evaporator, and the liquid carry-over is therefore significantly reduced without negatively impacting the velocity distribution.

According to further aspects of the invention which are advantageous but not compulsory, such a baffle may incorporate one or several of the following optional features:
- The perforated area is formed by a plurality of holes, the area of the section of each hole being comprised between 15 and 80 mm².
- The perforated area comprises holes each having a section of an equivalent hydraulic diameter comprised between 5 and 10 mm.
- The baffle comprises a bottom central portion and two longitudinal side portions which connect the central bottom portion with an inner surface of the shell.
- The baffle comprises axial ends which delimit, with respect to an inner surface of the shell, axial openings through which refrigerant fluid can flow along a longitudinal axis of the baffle.

The invention also concerns an evaporator for a refrigeration circuit comprising:
- a shell extending along a longitudinal axis and having end plates, delimiting an internal volume,
- a bundle of pipes for the circulation of a fluid to be cooled down, extending in the longitudinal axis and through the end plates inside the internal volume delimited by the shell,
- an inlet pipe allowing entry of a liquid refrigerant fluid into the internal volume,
- at least one suction pipe allowing the vaporized refrigerant fluid to be aspired out of the internal volume,
- a baffle as mentioned here-above, extending in the longitudinal axis and placed between the bundle of pipes and the suction pipe with respect to the refrigerant fluid flow direction, said baffle forming obstacle barrier against the refrigerant fluid flow, the non-perforated area of the baffle being placed in alignment with a central axis of the suction pipe.

According to further aspects of the invention which are advantageous but not compulsory, such an evaporator may incorporate one or several of the following optional features:
- The bundle of pipes covers up to two thirds of the transversal section of the shell.
- The evaporator comprises several suction pipes each adapted to be connected to one of a plurality of compressors of a refrigeration circuit.

The invention also concerns a refrigeration circuit composing an evaporator as mentioned here above.

According to an optional embodiment, the refrigeration circuit may comprise at least one centrifugal compressor.

According to another optional embodiment, the refrigeration circuit may comprise at least one screw compressor.

The invention will be explained in correspondence with the annexed figures, as an illustrative example. In the annexed figures:
- Figure 1 is a perspective view of an evaporator, a portion of a shell of the evaporator being removed;

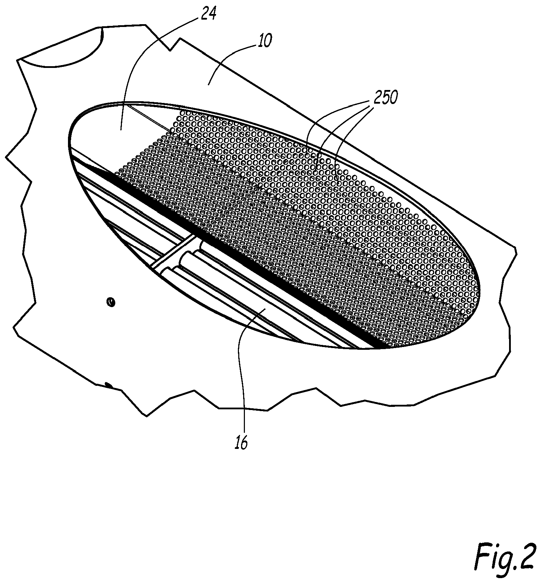

- Figure 2 is a view at a larger scale of detail II on figure 1;
- Figure 3 is a top view of the evaporator of figure 1, the shell being open to see the interior of the evaporator;
- Figure 4 is a sectional view of the evaporator of figure 1 along the section plane IV-IV;

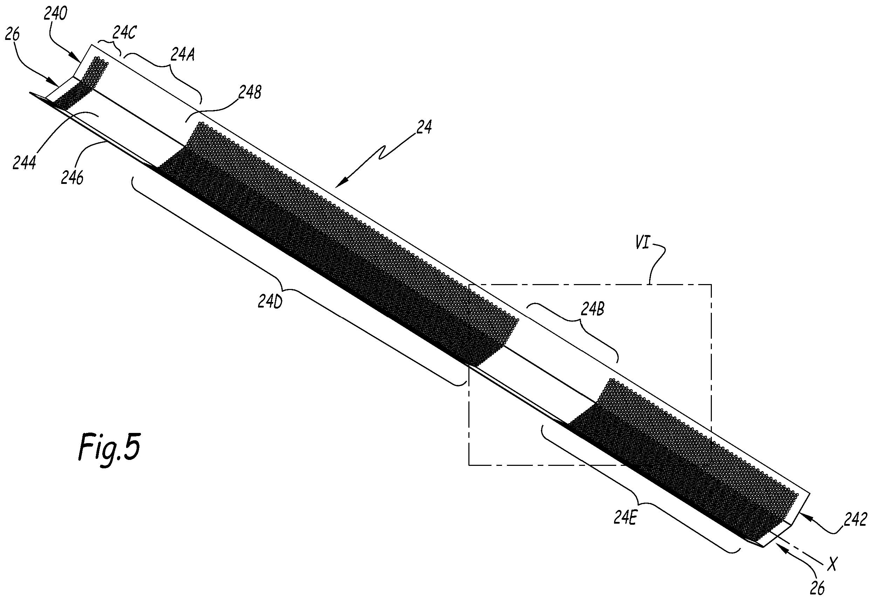

- Figure 5 is a perspective view of a baffle of the evaporator of figure 1;

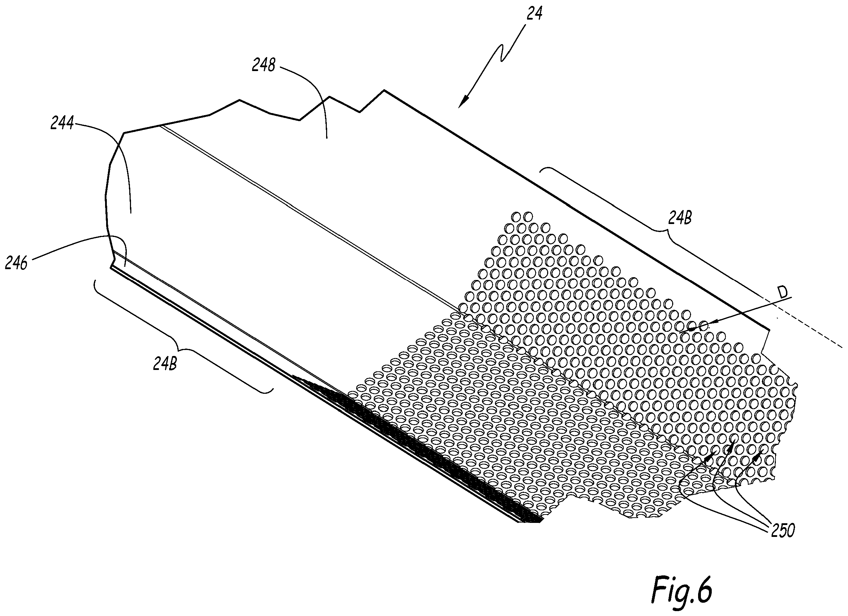

- Figure 6 is a view, at a larger scale, of detail VI on figure 5;
- Figure 7 is a schematic view of a refrigeration circuit incorporating the evaporator of figure 1.

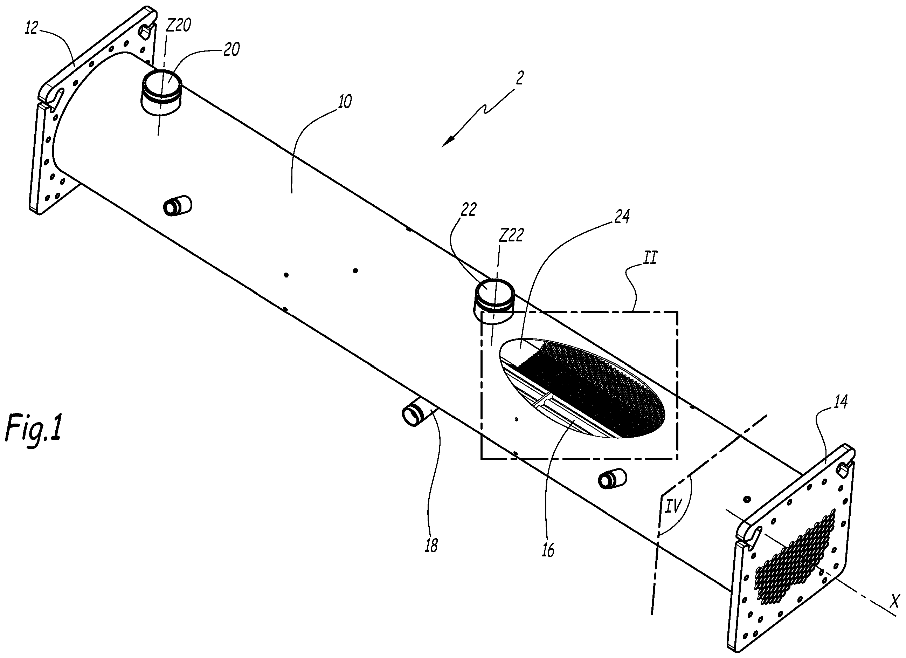

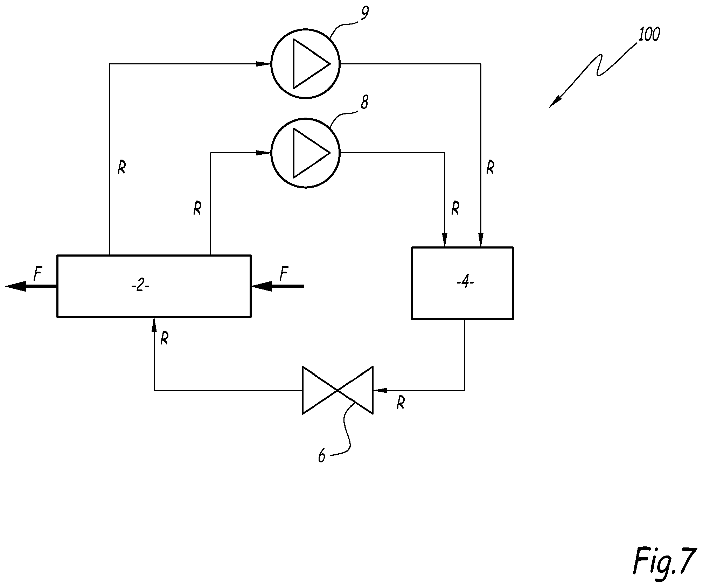

Figure 1 shows an evaporator 2 belonging to a refrigeration circuit 100 as depicted in figure 7. The refrigeration circuit 100 comprises an evaporator 2, at least one compressor, a condenser 4 and a pressure reducer 6. In the present example, the circuit 100 may comprise more than one compressor, for example two compressors 8 and 9 which are disposed in parallel between the evaporator 2 and the condenser 4. A fluid F to be cooled down circulates in the evaporator 2. A refrigerant fluid R circulates in the refrigeration circuit 100. The working principle of a refrigeration circuit is well-know and will not be further detailed.

The evaporator 2 comprises a shell 10 which extends along a longitudinal axis X. The shell 10 has a substantially cylindrical shape centered on the longitudinal axis X. The shell 10 comprises end plates 12 and 14 which extend perpendicular to the longitudinal axis X. The shell 10 and the end plates 12 and 14 delimit an internal volume V of the evaporator 2.

The terms "axial" and "longitudinal" are used in reference to the longitudinal axis X in this description.

The evaporator 2 also includes a bundle of pipes 16, for the circulation of the fluid F to be cooled down. The bundle of pipes 16 extends along the longitudinal axis X through the end plates 12 and 14 inside the internal volume V.

The evaporator 2 composes an inlet pipe 18 for allowing entry of the refrigerant R in liquid form into the internal volume V.

The evaporator 2 also comprises at least one suction pipe allowing the vaporized refrigerant fluid R to be aspired out of the internal volume V towards the compressors 8 and 9. In the shown example, the evaporator 2 comprises two suction pipes 20 and 22 which respectively are linked to the compressors 8 and 9.

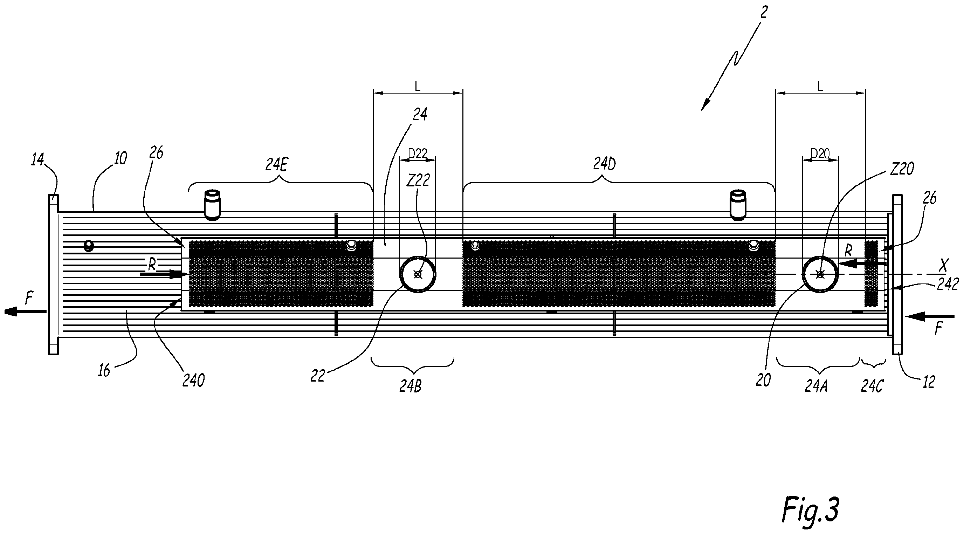

The evaporator 2 comprises a baffle 24 formed by an elongated plate which extends along the longitudinal axis X and which is placed between the bundle of pipes 16 and the suction pipes 20 and 22 with respect to the refrigerant fluid flow direction. The baffle 24 therefore forms obstacle barrier against the flow of the refrigerant fluid F. The baffle 24 comprises at least one perforated area and at least one non-perforated area. The non-perforated area is placed at least partially in alignment with the central axis of the suction pipe. In the example as shown in Fig. 3, the baffle 24 comprises two non-perforated areas 24A and 24B which correspond each to one of the suction pipes 20 and 22. The suction pipes 20 and 22 have a respective central axis Z20 and Z22. These central axes Z20 and Z22 are aligned with the non-perforated areas 24A and 24B. In other words, as shown in Fig. 3, the central axes Z20 and Z22 intersect with the baffle 24 in the non-perforated areas 24A and 24B.

The baffle 24 comprises three perforated areas. A first perforated area 24C extends between a first axial end 240 of the baffle 24 and the non-perforated area 24A. A second perforated area 24D extend approximately on a central portion of the baffle 24 between the non-perforated areas 24A and 24B. A third perforated area 24E extends between the non-perforated area 24B and an axial end 242 of the baffle 24.

The delimitation of the perforated areas 24C, 24D and 24E and of the non-perforated areas 24A and 24B imply that the non-perforated areas 24A and 24B are at least overlapped by the projected surfaces of sections of the suction pipes 20 and 22 on the baffle 24, as shown in Fig. 3. Preferably, the non-perforated areas 24A and 24B have a length L, in the longitudinal direction X, that can be up to three times the diameters D20 and D22 of the suction pipes 20 and 22. The diameters D20 and D22 may be different.

The perforated areas 24C, 24D and 24E and the non-perforated areas 24A and 24B form a void ratio at least equal to 40% of the total surface of the baffle 24. The void ratio is the ratio between the total perforated surface of the baffle 24 and the total surface of the baffle 24. The total perforated surface corresponds to the sum of the surfaces of all the perforations present on the perforated surfaces 24C, 24D and 24E. According to an example, the void ratio may be comprised 40% and 60%. More preferably, the void ration may be over 50%. This permits a significant gas flow towards the suction pipes 20 and 22, in order to reduce the refrigerant velocity in the internal volume V to a value which prevents liquid carry-over. For example, under a velocity approximately equal to 0,7 m/s, the risk of liquid carry-over is reduced.

As can be seen in Fig. 3, the baffle 24 also has open axial sides 26 allowing refrigerant fluid F to flow along the longitudinal axis X towards the suction pipes 20 and 22. The axial ends 240 and 242 form openings with respect to an inner surface 10A of the shell 10, through which the refrigerant fluid can flow from in the inlet pipe 18 towards the suction pipes 20 and 22.

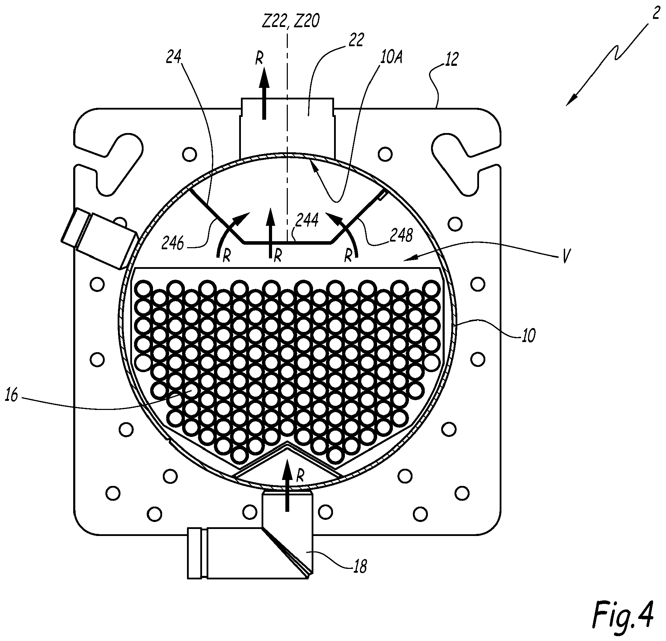

As shown in Fig. 4, the baffle 24 comprises a bottom central portion 244 and two longitudinal side portions 246 and 248. The baffle 24 is therefore formed by surfaces that are parallel to the longitudinal direction X. The baffle 24 has no surfaces that form barriers or obstacles perpendicular to the longitudinal axis X or which are inclined with respect to the longitudinal direction X that may oppose the circulation of fluid along the longitudinal direction X.

According to an embodiment, the longitudinal side portions 246 and 248 connect the central bottom portion 244 of the baffle to the inner surface 10A of the shell 10. The longitudinal side portions 246 and 248 may be attached to the inner surface 10A with non-shown fastening means, such as by way of welding, bolting, riveting, etc.

The longitudinal side portions 246 and 248 are inclined with respect to the central bottom portion 244. The respective shapes of the portions 244, 246 and 248 and their orientation with respect to each other may be different.

According to an embodiment, the perforated areas are formed by a plurality of holes 250, each of the holes 250 defining a passage section. The section of each hole is preferably of an area comprised between 15 and 80 mm². The section of the holes and their density allows air passage while insuring that many liquid droplets will be blocked by the solid portions of the baffle 24 extending between the holes

In the present example, the perforated areas comprise holes having a circular section of a diameter D comprised between 5 and 10 mm. More generally, the holes have a section of equivalent hydraulic diameter comprised between 5 and 10 mm. According to a non-shown embodiment, the holes 250 may have a different shape, for example a square shape, a triangular shape or any other shape, and have a section that would correspond, in terms of hydraulic diameter, to the flow passage that would be allowed by a circular section according to the aforementioned range.

The bundle of pipes 16 covers up to two parts of the transversal section of the shell 10. This is permitted by the reduced speed of the refrigerant R obtained by the design of the baffle 24, which allows placing the bundle of pipes 16 closer to the suction pipes 20 and 22 and therefore increasing the number of pipes, and thus the capacity of the evaporator 2. This also allows, while having the same number of pipes as in standard designs, to reduce the diameter of the shell, and thus the refrigerant charge, and thereby improving the radial compactness of the evaporator.

The reduction of the local velocity of the gaseous refrigerant allows increasing the quantity of liquid refrigerant that is present in the shell, as the refrigerant level with respect to the suction pipe can be higher without provoking liquid carry-over. This improves the capacity of the evaporator.

The localization of the baffle 24 in the shell 10 can be different from the localization showed in the drawings. For example, the baffle 24 can be placed at equal distance from the end plates 12 and 14, or located more closely to the end plate 14 than to the end plate 12. The positions of the suction pipes 20 and 22 can also be different.

The compressors 8 and 9 used in the refrigeration circuit 100 may be either centrifugal compressors, or screw compressors, or a combination of both. In use with both these technologies of compressors, the same technical effects and advantages can be obtained, with a reduced cost.

The refrigeration circuit can also include more than two compressors, and the evaporator more than two suction pipes corresponding with more than two non-perforated areas.

The invention also applies to evaporators having only one suction pipe, connected to a single compressor.

## Claims

1. A baffle (24) for an evaporator (2) of a refrigeration circuit (10), said baffle (24) being adapted to be placed in an internal volume (V) of a shell (10) of the evaporator (2) to form a barrier against a refrigerant fluid (R) flow towards a suction pipe (20, 22) of the evaporator (2), the baffle (24) comprising at least one perforated area (24C, 24D, 24E) and at least one non-perforated area (24A, 24B), **characterised in that** the perforated area (24C, 24D, 24E) and the non-perforated area (24A, 24B) of the baffle (24) form a void ratio at least equal to 40% of the total surface of the baffle (24), and the baffle (24) has open axial sides (26) allowing refrigerant fluid flow (R) along a longitudinal axis (X) of the baffle (24).

2. A baffle according to claim 1, wherein the perforated area (24C, 24D, 24E) is formed by a plurality of holes (250), the area of the section of each hole (250) being comprised between 15 and 80 mm².

3. A baffle according to claim 2, wherein the perforated area (24C, 24D, 24E) comprises holes (250) each having a section of an equivalent hydraulic diameter (D) comprised between 5 and 10 mm.

4. A baffle according to one of the preceding claims, wherein the baffle (24) comprises a bottom central portion (244) and two longitudinal side portions (246, 248) which connect the central bottom portion (244) with an inner surface of the shell (10A).

5. A baffle according to one of the preceding claims, wherein the baffle (24) comprises axial ends (240, 242) which delimit, with respect to an inner surface (10A) of the shell (10), axial openings (26) through which refrigerant fluid (R) can flow along a longitudinal axis (X) of the baffle (24).

6. An evaporator (2) for a refrigeration circuit (100) comprising:
- a shell (10) extending along a longitudinal axis (X) and having end plates (12, 14), delimiting an internal volume (V),
- a bundle of pipes (16) for the circulation of a fluid (F) to be cooled down, extending in the longitudinal axis (X) and through the end plates (12, 14) inside the internal volume (V) delimited by the shell (10),
- an inlet pipe (18) allowing entry of a liquid refrigerant fluid (R) into the internal volume (V),
- at least one suction pipe (20, 22) allowing the vaporized refrigerant fluid (R) to be aspired out of the internal volume (V),
- a baffle (24) according to one of the preceding claims, extending in the longitudinal axis (X) and placed between the bundle of pipes (16) and the suction pipe (20, 22) with respect to the refrigerant fluid flow direction, said baffle (24) forming obstacle barrier against the refrigerant fluid flow, the non-perforated area (24A, 24B) of the baffle (24) being placed in alignment with a central axis (Z22) of the suction pipe (20, 22).

7. An evaporator according to claim 6, wherein the bundle of pipes (16) covers up to two thirds of the transversal section of the shell (10).

8. An evaporator according to one of claims 6 and 7, wherein the evaporator (2) comprises several suction pipes (20, 22) each adapted to be connected to one of a plurality of compressors (8, 9) of a refrigeration circuit (100).

9. A refrigeration circuit (10) comprising an evaporator (2) according to any of claims 6 to 8.

10. A refrigeration circuit according to claim 9, wherein it comprises at least one centrifugal compressor (8, 9).

11. A refrigeration circuit according to any of claims 9 and 10, wherein it comprises at least one screw compressor (8, 9).

## Patentansprüche

1. Ablenkplatte (24) für einen Verdampfer (2) eines Kühlkreislaufs (10), wobei die Ablenkplatte (24) angepasst ist, um in einem Innenvolumen (V) eines Mantels (10) des Verdampfers (2) angeordnet zu sein, um eine Barriere gegen eine Strömung eine Kühlflüssigkeit (R) in Richtung eines Saugrohrs (20, 22) des Verdampfers (2) zu bilden, die Ablenkplatte (24) umfassend mindestens einen perforierten Bereich (24C, 24D, 24E) und mindestens einen nicht-perforierten Bereich (24A, 24B), **dadurch gekennzeichnet, dass** der perforierte Bereich (24C, 24D, 24E) und der nicht-perforierte Bereich (24A, 24B) der Ablenkplatte (24) einen Hohlraumanteil von mindestens 40 % der Gesamtoberfläche der Ablenkplatte (24) bilden und die Ablenkplatte (24) offene axiale Seiten (26) aufweist, die eine Kühlfluidströmung (R) entlang einer Längsachse (X) der Ablenkplatte (24) ermöglichen.

2. Ablenkplatte nach Anspruch 1, wobei der perforierte Bereich (24C, 24D, 24E) durch eine Vielzahl von Löchern (250) gebildet wird, wobei die Fläche des Querschnitts von jedem Loch (250) zwischen 15 und 80 mm² ist.

3. Ablenkplatte nach Anspruch 2, wobei der perforierte Bereich (24C, 24D, 24E) Löcher (250) umfasst, die jeweils einen Querschnitt mit einem äquivalenten hydraulischen Durchmesser (D) zwischen 5 und 10 mm aufweisen.

4. Ablenkplatte nach einem der vorherigen Ansprüche, wobei die Ablenkplatte (24) einen mittleren Bodenabschnitt (244) und zwei Längsseitenabschnitte (246, 248) aufweist, die den mittleren Bodenabschnitt (244) mit einer Innenfläche des Mantels (10A) verbinden.

5. Ablenkplatte nach einem der vorherigen Ansprüche, wobei die Ablenkplatte (24) axiale Enden (240, 242) umfasst, die in Bezug auf eine Innenfläche (10A) des Mantels (10) axiale Öffnungen (26) begrenzen, durch die Kühlflüssigkeit (R) entlang einer Längsachse (X) der Ablenkplatte (24) strömen kann.

6. Verdampfer (2) für einen Kühlkreislauf (100), umfassend:
- einen Mantel (10), der sich entlang einer Längsachse (X) erstreckt und Endplatten (12, 14) aufweist, die ein Innenvolumen (V) begrenzen,
- ein Rohrbündel (16) für die Zirkulation eines zu kühlenden Fluids (F), das sich in der Längsachse (X) und durch die Endplatten (12, 14) innerhalb des von dem Mantel (10) begrenzten Innenvolumens (V) erstreckt,
- ein Einlassrohr (18), das einen Eintritt eine flüssige Kühlflüssigkeit (R) in das Innenvolumen (V) ermöglicht,
- mindestens eine Saugleitung (20, 22), die ermöglicht, dass die verdampfte Kühlflüssigkeit (R) aus dem Innenvolumen (V) abgesaugt wird,
- eine Ablenkplatte (24) nach einem der vorherigen Ansprüche, die sich in der Längsachse (X) erstreckt und zwischen dem Rohrbündel (16) und dem Ansaugrohr (20, 22) in Bezug auf die Kühlfluid-Strömungsrichtung angeordnet ist, wobei die Ablenkplatte (24) eine Hindernisbarriere für die Kühlfluidströmung bildet, wobei der nicht perforierte Bereich (24A, 24B) der Ablenkplatte (24) in Ausrichtung mit einer Mittelachse (Z22) des Ansaugrohrs (20, 22) platziert ist.

7. Verdampfer nach Anspruch 6, wobei das Rohrbündel (16) bis zu zwei Drittel des Querschnitts des Mantels (10) abdeckt.

8. Verdampfer nach einem der Ansprüche 6 und 7, wobei der Verdampfer (2) mehrere Saugrohre (20, 22) aufweist, die jeweils angepasst sind, um mit einem von einer Vielzahl von Verdichtern (8, 9) eines Kühlkreislaufs (100) verbunden zu sein.

9. Kühlkreislauf (10), umfassend einen Verdampfer (2) nach einem der Ansprüche 6 bis 8.

10. Kühlkreislauf nach Anspruch 9, **dadurch gekennzeichnet, dass** er mindestens einen Zentrifugalkompressor (8, 9) umfasst.

11. Kühlkreislauf nach einem der Ansprüche 9 und 10, **dadurch gekennzeichnet, dass** er mindestens einen Schraubenverdichter (8, 9) umfasst.

## Revendications

1. Déflecteur (24) pour un évaporateur (2) d'un circuit de réfrigération (10), ledit déflecteur (24) étant adapté pour être placé dans un volume interne (V) d'une coque (10) de l'évaporateur (2) pour former une barrière contre un écoulement de fluide frigorigène (R) vers un tube d'aspiration (20, 22) de l'évaporateur (2), le déflecteur (24) comprenant au moins une zone perforée (24C, 24D, 24E) et au moins une zone non perforée (24A, 24B), **caractérisé en ce que** la zone perforée (24C, 24D, 24E) et la zone non perforée (24A, 24B) du déflecteur (24) forment un taux de vides au moins égal à 40 % de la surface totale du déflecteur (24), et le déflecteur (24) a des côtés axiaux ouverts (26) permettant l'écoulement de fluide frigorigène (R) suivant un axe longitudinal (X) du déflecteur (24).

2. Déflecteur selon la revendication 1, dans lequel la zone perforée (24C, 24D, 24E) est formée par une pluralité de trous (250), l'aire de la section de chaque trou (250) étant comprise entre 15 et 80 mm².

3. Déflecteur selon la revendication 2, dans lequel la zone perforée (24C, 24D, 24E) comprend des trous (250) ayant chacun une section d'un diamètre hydraulique équivalent (D) compris entre 5 et 10 mm.

4. Déflecteur selon l'une des revendications précédentes, dans lequel le déflecteur (24) comprend une portion centrale de fond (244) et deux portions de côté longitudinales (246, 248) qui relient la partie centrale de fond (244) à une surface intérieure de la coque (10A).

5. Déflecteur selon l'une des revendications précédentes, dans lequel le déflecteur (24) comprend des extrémités axiales (240, 242) qui délimitent, vis-à-vis d'une surface intérieure (10A) de la coque (10), des ouvertures axiales (26) à travers lesquelles le fluide frigorigène (R) peut suivant un axe longitudinal (X) du déflecteur (24).

6. Évaporateur (2) pour un circuit de réfrigération (100) comprenant :
- une coque (10) s'étendant suivant un axe longitudinal (X) et ayant des plaques d'extrémité (12, 14), délimitant un volume interne (V),
- un faisceau de tubes (16) pour la circulation d'un fluide (F) à refroidir, s'étendant dans l'axe longitudinal (X) et à travers les plaques d'extrémité (12, 14) à l'intérieur du volume interne (V) délimité par la coque (10),
- un tube d'entrée (18) permettant l'entrée d'un fluide frigorigène liquide (R) dans le volume interne (V),
- au moins un tube d'aspiration (20, 22) permettant d'aspirer le fluide frigorigène vaporisé (R) hors du volume interne (V),
- un déflecteur (24) selon l'une des revendications précédentes, s'étendant dans l'axe longitudinal (X) et placé entre le faisceau de tubes (16) et le tube d'aspiration (20, 22) vis-à-vis de la direction d'écoulement de fluide frigorigène, ledit déflecteur (24) formant barrière d'obstacle à l'écoulement de fluide frigorigène, la zone non perforée (24A, 24B) du déflecteur (24) étant placée en alignement avec un axe central (Z22) du tube d'aspiration (20, 22).

7. Évaporateur selon la revendication 6, dans lequel le faisceau de tubes (16) couvre jusqu'à deux tiers de la section transversale de la coque (10).

8. Évaporateur selon l'une des revendications 6 et 7, dans lequel l'évaporateur (2) comprend plusieurs tubes d'aspiration (20, 22) adaptés chacun pour être reliés à l'un d'une pluralité de compresseurs (8, 9) d'un circuit de réfrigération (100).

9. Circuit de réfrigération (10) comprenant un évaporateur (2) selon l'une quelconque des revendications 6 à 8.

10. Circuit de réfrigération selon la revendication 9, dans lequel il comprend au moins un compresseur centrifuge (8, 9).

11. Circuit de réfrigération selon l'une quelconque des revendications 9 et 10, dans lequel il comprend au moins un compresseur à vis (8, 9).
